# EUROPÄISCHE PATENTSCHRIFT

(11) **EP 1 977 626 B1**
(45) Veröffentlichungstag und Bekanntmachung des Hinweises auf die Patenterteilung: **12.07.2017**
(21) Anmeldenummer: 06829196.2
(22) Anmeldetag: 30.11.2006
(51) Int. Cl.: H04N 1/17, H04R 1/40, H04R 3/12, H04R 5/027, H04N 7/15, H04N 7/14

(54) **VERFAHREN ZUR AUFNAHME EINER TONQUELLE MIT ZEITLICH VARIABLER RICHTCHARAKTERISTIK UND ZUR WIEDERGABE**
METHOD FOR RECORDING AND REPRODUCING A SOUND SOURCE WITH TIME-VARIABLE DIRECTIONAL CHARACTERISTICS
PROCÉDÉ POUR ENREGISTRER ET REPRODUIRE LES SIGNAUX SONORES D'UNE SOURCE SONORE PRÉSENTANT DES CARACTÉRISTIQUES DIRECTIVES VARIABLES DANS LE TEMPS

(30) Priorität: 30.11.2005 DE 102005057406
(43) Veröffentlichungstag der Anmeldung: 08.10.2008
(73) Patentinhaber: Valenzuela, Miriam Noemi, 81825 München (DE); Valenzuela, Carlos Alberto, 81825 München (DE)
(72) Erfinder: Valenzuela, Miriam Noemi, 81825 München (DE); Valenzuela, Carlos Alberto, 81825 München (DE)
(74) Vertreter: Mahler, Peter
(86) Internationale Anmeldenummer: PCT/EP2006/011496
(87) Internationale Veröffentlichungsnummer: WO 2007/062840

(56) Entgegenhaltungen:
- EP-A- 1 551 205
- WO-A-94/16517
- WO-A-03/015407
- WO-A-2004/100546
- US-A1- 5 940 118
- W.P.J. DE BRUIJN: "Application of Wave Field Synthesis in Videoconferencing" 4. Oktober 2004 (2004-10-04), TECHNISCHE UNIVERSITEIT DELFT , DELFT (THE NETHERLANDS) , XP002426285 Seite 8 - Seite 21
- FLANAGAN J L ET AL: "COMPUTER-STEERED MICROPHONE ARRAYS FOR SOUND TRANSDUCTION IN LARGE ROOMS" JOURNAL OF THE ACOUSTICAL SOCIETY OF AMERICA, AIP / ACOUSTICAL SOCIETY OF AMERICA, MELVILLE, NY, US, Bd. 78, Nr. 5, 1. November 1985 (1985-11-01), Seiten 1508-1518, XP000195783 ISSN: 0001-4966

## Beschreibung

Die Erfindung betrifft ein Verfahren zur Aufnahme von Tonsignalen von einer in einem Aufnahmeraum angeordneten Tonquelle mit zeitlich variabler Richtcharakteristik und zur Wiedergabe der Tonsignale in einem Wiedergaberaum, sowie ein System zur Durchführung des Verfahrens.

Es sind verschiedene Verfahren bekannt, mit denen versucht wird, den Klangeindruck, der in einem Raum entsteht, aufzuzeichnen und wiederzugeben. Das bekannteste Verfahren ist das Stereo-Verfahren und die Weiterentwicklungen davon, bei dem der Ort einer Klangquelle bei der Aufzeichnung erfasst und bei der Wiedergabe abgebildet wird. Bei der Wiedergabe gibt es jedoch nur einen eingeschränkten Bereich in dem der Ort der aufgenommenen Klangquelle richtig wiedergegeben wird. Andere Wiedergabeverfahren, die das aufgenommene Schallfeld synthetisieren, wie beispielsweise die Wellenfeldsynthese, können hingegen den Ort der Schallquelle unabhängig von der Zuhörerposition korrekt wiedergeben. Solche Verfahren sind zum Beispiel aus den Dokumenten WO 94/16517 A1, WO 03/015407 A1, WO 2004/100546 A1 und W.P.J. DE BRUIJN: "Application of Wave Field Synthesis in Videoconferencing", 4. Oktober 2004 (2004-10-04), TECHNISCHE UNIVERSITEIT DELFT, DELFT (THE NETHERLANDS), XP002425285, bekannt.

Bei keinem dieser Verfahren werden zeitlich variable Informationen über die Abstrahlungsrichtung einer Schallquelle aufgenommen und wiedergegeben. Werden Schallquellen mit zeitlich variabler Richtcharakteristik aufgenommen, so gehen Informationen verloren. Beispielsweise für die Übertragung einer Videokonferenz, bei der ein Teilnehmer sich an unterschiedliche Teilnehmer wenden und sie gezielt ansprechen kann, werden mit den bekannten Verfahren diese Richtungsinformationen nicht erfasst, aufgenommen und wiedergegeben.

Der Erfindung liegt die Aufgabe zugrunde ein Verfahren zur Aufzeichnung Übertragung und Wiedergabe von Ton zu schaffen, mit dem die informationstragenden Eigenschaften der Schallquellen wahrnehmungsnah wiedergegeben werden und insbesondere in Echtzeit übertragen werden können.

Die Aufgabe wird gelöst durch ein Verfahren zur Aufnahme von Tonsignalen von einer in einem Aufnahmeraum angeordneten Tonquelle mit zeitlich variabler Richtcharakteristik mit Tonaufnahmemitteln und zur Wiedergabe der Tonsignale mit Tonwiedergabemitteln in einem Wiedergaberaum, das dadurch gekennzeichnet ist, dass die Hauptabstrahlrichtung
der von der Tonquelle ausgesendeten Tonsignale in Abhängigkeit von der Zeit erfasst wird und die Wiedergabe in Abhängigkeit der erfassten Hauptabstrahlrichtung erfolgt. Der Erfindung liegt ein Verfahren und ein System gemäß der unabhängigen Ansprüche 1 und 12 zu Grunde. Eine Tonquelle mit zeitlich variabler Richtcharakteristik kann dabei insbesondere ein Teilnehmer einer Videokonferenz sein, der sich anderen Teilnehmern zuwenden und so in verschiedene Richtungen sprechen kann. Die ausgesendeten Tonsignale werden aufgezeichnet und gleichzeitig ihre Hauptabstrahlrichtung erfasst.

Die Aufzeichnung der Tonsignale kann in herkömmlicher Weise mit Mikrophonen wie auch mit einem oder mehreren Mikrophonarrays erfolgen. Die Mittel zur Erfassung der Hauptabstrahlrichtung können beliebiger Art sein. Insbesondere können akustische Mittel eingesetzt werden. Dazu können mehrere Mikrophone und/oder ein oder mehrere Mikrophonarrays verwendet werden, die die Pegel- und/oder Phasendifferenzen des Signals in unterschiedlichen Richtungen erfassen, woraus die Hauptabstrahlrichtung mittels einer geeigneten Signalverarbeitung ermittelt werden kann. Wenn die Position der akustischen Mittel, deren Richtcharakteristiken, und/oder die Position der Tonquelle bekannt sind, können diese Informationen bei der Bestimmung der Hauptabstrahlrichtung durch die Signalverarbeitung entsprechend berücksichtigt werden. Ebenso kann auch Wissen über die Geometrie der Umgebung und die damit zusammenhängenden Eigenschaften für die Schallausbreitung, wie auch Reflexionseigenschaften bei der Ermittlung der Hauptabstrahlrichtung einbezogen werden. Besonders vorteilhaft können auch Informationen über die gemessene, genäherte oder simulierte Richtcharakteristik der Tonquelle bei der Ermittlung der Hauptabstrahlrichtung mit einbezogen werden. Dies gilt besonders dann, wenn die Hauptabstrahlrichtung nur grob ermittelt werden soll, was für viele Anwendungen ausreichend ist.

Zur Erfassung der Hauptabstrahlrichtung können aber auch optische Mittel verwendet werden, wie z. B. eine Videoerfassung mit Mustererkennung. Bei den Teilnehmern einer Videokonferenz ist davon auszugehen, dass die Sprechrichtung der Blickrichtung entspricht. Somit kann durch eine Mustererkennung ermittelt werden, in welche Richtung ein Teilnehmer blickt, und daraus die Sprechrichtung ermittelt werden. Insbesondere kann auch eine Kombination von akustischen und optischen Mitteln mit entsprechender Signalverarbeitung verwendet werden. Gegebenenfalls können die akustischen Mittel für die Aufzeichnung der Tonsignale auch gleichzeitig zur Erfassung der Hauptabstrahlrichtung verwendet werden, und umgekehrt.

Oft ist es ausreichend, die Hauptabstrahlrichtung grob zu ermitteln. Eine Abstufung in 3 oder 5 Stufen, z. B. gerade, rechts und links oder gerade, schräg nach rechts, rechts, schräg nach links und links kann voll ausreichen, um die wesentlichen Informationen zu vermitteln.

Die Hauptabstrahlrichtung kann vorteilhaft die Hauptabstrahlrichtung in demjenigen Frequenzbereich sein, der informationstragend ist. Hierzu kann der zur Ermittlung der Hauptabstrahlrichtung herangezogene Frequenzbereich eingeschränkt werden, z. B. durch die Verwendung eines Frequenzfilters.

Die Wiedergabe der Tonsignale soll in Abhängigkeit der erfassten Hauptabstrahlrichtung erfolgen. Dabei soll die gerichtete Abstrahlung der Originalquelle simuliert werden. Dies kann entweder durch eine echte gerichtete Abstrahlung des Tonsignals erfolgen oder durch eine simulierte gerichtete Wiedergabe, die vom Zuhörer als gerichtete Wiedergabe wahrgenommen wird, ohne physikalisch tatsächlich gerichtet im herkömmlichen Sinne zu sein. Die anwendbaren Verfahren unterscheiden sich unter anderem in der Genauigkeit, mit der die Richtcharakteristik rekonstruiert wird. In der Praxis ist die wahrnehmungsorientierte Natürlichkeit der Rekonstruktion bzw. Simulation ausschlaggebend. Im Folgenden sollen alle solche Verfahren unter dem Begriff "gerichtete Wiedergabe" zusammengefasst werden.

Bei dem erfindungsgemäßen Verfahren kann die Wiedergabe der Tonsignale mit einer der Tonquelle zugeordneten ersten Wiedergabeeinheit und wenigstens einer beabstandet von der ersten Wiedergabeeinheit angeordneten zweiten Wiedergabeeinheit erfolgen. Dabei kann die Position der ersten Wiedergabeeinheit im Wiedergaberaum einer virtuellen Position der Tonquelle im Wiedergaberaum entsprechen. Die zweite bzw. zweiten Wiedergabeeinheiten können zur Vermittlung der Richtungsinformation der Tonwiedergabe dienen. Vorzugsweise werden hierfür zwei zweite Wiedergabeeinheiten verwendet, von denen eine auf der einen und die andere auf der anderen Seite von der ersten Tonwiedergabeeinheit positioniert werden kann. Statt jeweils eine zweite Wiedergabeeinheit auf jeder Seite der ersten Tonwiedergabeeinheit zu verwenden, können jeweils auch mehrere voneinander beabstandete zweite Wiedergabeeinheiten angeordnet werden, vorzugsweise jeweils zwei zweite Wiedergabeeinheiten.

Die im Aufnahmeraum aufgenommenen Tonsignale der Tonquelle können im Wiedergaberaum von einer ersten Wiedergabeeinheit, wie z. B. einem Lautsprecher, wiedergegeben werden. Dieser Lautsprecher kann so im Wiedergaberaum platziert werden, dass er sich an der virtuellen Position der Tonquelle im Wiedergaberaum befindet. Die Tonquelle wird also sozusagen in den Wiedergaberaum hereingeholt. Die erste Wiedergabeeinheit kann aber auch mit mehreren Lautsprechern, mit einer Gruppe von Lautsprechern oder mit einem Lautsprecherarray erzeugt werden. Beispielsweise ist es möglich die erste Wiedergabeeinheit mittels Wellenfeldsynthese als Punktquelle an der virtuellen Position der Tonquelle im Wiedergaberaum zu platzieren, so dass die Tonquelle virtuell in den Wiedergaberaum hereingeholt wird. Das ist vorteilhaft z. B. für Videokonferenzen, bei denen möglichst der Eindruck einer tatsächlichen Konferenz unter Anwesenheit aller Teilnehmer erreicht werden soll. Tonquelle wäre dann ein Teilnehmer im Aufnahmeraum. Die Wiedergabe würde über eine erste Wiedergabeeinheit erfolgen, die an der Stelle im Wiedergaberaum platziert wäre, an der der Teilnehmer im Aufnahmeraum virtuell im Wiedergaberaum anwesend wäre.

Die Information über die Abstrahlrichtung kann dadurch vermittelt werden, dass die Wiedergabe mit der oder den zweiten Wiedergabeeinheiten gegenüber der ersten Wiedergabeeinheit mit einer Zeitverzögerung τ gegenüber der ersten Wiedergabeeinheit erfolgt. Die Zeitverzögerung kann dabei für die zweiten Wiedergabeeinheiten jeweils unterschiedlich sein. Es hat sich gezeigt, dass dem menschlichen Ohr eine Information bezüglich der Abstrahlrichtung einer Tonquelle dadurch vermittelt werden kann, dass eine Art Echo oder Reflexion des Tonsignals von einer oder mehreren beabstandeten Tonquellen mit geringer Zeitverzögerung ausgesendet wird. Die Zeitverzögerung an Teilnehmerpositionen, an denen z. B. bei einer Videokonferenz ein Teilnehmer platziert werden kann, sollte dabei zwischen 2 ms und 100 ms betragen, damit das Echo bzw. die Reflexion nicht als separates Schallereignis verarbeitet wird. Die Zeitverzögerung τ der zweiten Wiedergabeeinheit oder -einheiten kann deshalb vorzugsweise so gewählt werden, dass die tatsächliche Zeitverzögerung zwischen den Tonsignalen zumindest in Teilbereichen des Wiedergaberaums zwischen 2 ms und 100 ms, vorzugsweise zwischen 5 ms und 80 ms und insbesondere zwischen 10 ms und 40 ms, beträgt.

Die Wiedergabe durch die zweite(n) Wiedergabeeinheit(en) kann entsprechend den Raumeigenschaften des Wiedergaberaums mit einem reduzierten Pegel, insbesondere mit einem um 1 bis 6 dB und vorzugsweise um 2 bis 4 dB reduzierten Pegel erfolgen. Entsprechend der zu simulierenden Richtcharakteristik kann das Tonsignal vor der Wiedergabe durch die zweite(n) Wiedergabeeinheit(en) auch mit einem Frequenzfilter bearbeitet werden, beispielsweise einem Hochpass-, Tiefpass- oder Bandpassfilter. Die Parameter der Frequenzfilter können entweder fest vorgegeben sein oder in Abhängigkeit von der Hauptabstrahlrichtung gesteuert werden.

Die zweite(n) Wiedergabeeinheit(en) können, wie auch die erste Wiedergabeeinheit, ein oder mehrere Lautsprecher oder eine virtuelle Quelle, die mit einer Gruppe von Lautsprechern oder mit einem Lautsprecherarray beispielsweise mittels Wellenfeldsynthese erzeugt wird, sein.

Für eine möglichst wahrnehmungsgetreue Wiedergabe der Information über die Abstrahlrichtung einer Tonquelle kann auch der Wiedergabepegel der ersten und zweiten Wiedergabeeinheiten in Abhängigkeit der zu simulierenden Richtcharakteristik angepasst werden. Die Wiedergabepegel werden hierzu so eingestellt, dass die sich aus der Richtcharakteristik ergebenden wahrnehmbaren Lautheitsunterschiede an verschiedenen Zuhörerpositionen entsprechend angenähert werden. Die derart ermittelten Wiedergabepegel der einzelnen Wiedergabeeinheiten können für unterschiedliche Hauptabstrahlsrichtungen definiert und abgespeichert werden. Bei einer zeitlich variablen Richtcharakteristik steuert dann die erfasste Hauptabstrahlrichtung die Wiedergabepegel der einzelnen Wiedergabeeinheiten.

Das vorbeschriebene Verfahren kann selbstverständlich auch für mehrere Tonquellen im Aufnahmeraum angewendet werden. Für die Wiedergabe mehrerer Tonquellen mit dem beschriebenen Verfahren ist es besonders vorteilhaft, die Tonsignale der einzelnen zu übertragenen Tonquellen getrennt voneinander vorliegen zu haben. Daher sind verschiedene Verfahren zur Aufzeichnung der Tonsignale denkbar. Für die Aufzeichnung der Tonsignale können den einzelnen Tonquellen Tonaufnahmemittel zugeordnet werden. Die Zuordnung kann dabei entweder 1:1 erfolgen, so dass jede Tonquelle über ein eigenes Tonaufnahmemittel verfügt, oder so, dass die Tonquellen gruppiert jeweils zu mehreren einem Tonaufnahmemittel zugeordnet sind. Die Position der zu einem gegebenen Zeitpunkt aktiven Tonquelle kann sowohl mit herkömmlichen Lokalisationsalgorithmen als auch mit Videoerfassung und Mustererkennung ermittelt werden. Bei zeitgleicher Schallabstrahlung von mehr als einer Tonquelle können bei einer Gruppierung der Tonquellen zu einem Tonaufnahmemittel die Tonsignale der einzelnen Tonquellen mit herkömmlichen Quellentrennungsalgorithmen wie beispielsweise "Blind Source Separation", "Independent Component Analysis" oder "Convolutive Source Separation" voneinander getrennt werden. Bei bekannter Position der aufzuzeichnenden Tonquellen kann als Tonaufnahmemittel für eine Gruppe von Tonquellen auch ein dynamisches richtungsselektives Mikrophon-Array verwendet werden, das die empfangenen Tonsignale entsprechend den vorgegebenen Positionen verarbeitet und für jede Tonquelle getrennt zusammenfasst.

Die Erfassung der Hauptabstrahlrichtung der einzelnen Tonquellen kann mit den gleichen Prinzipien wie für eine Tonquelle beschrieben erfolgen. Hierzu können den einzelnen Tonquellen entsprechende Mittel zugeordnet werden. Die Zuordnung kann derart erfolgen, dass jede Tonquelle über ihr eigenes richtungserfassendes Mittel verfügt, oder so, dass die Tonquellen gruppiert jeweils zu mehreren einem richtungserfassenden Mittel zugeordnet sind. Bei gruppierten Tonquellen erfolgt die Erfassung der Hauptabstrahlrichtung wie bei einer Tonquelle, wenn zum gegebenen Zeitpunkt nur eine Tonquelle Schall abstrahlt. Strahlen zeitgleich zwei oder mehrere Tonquellen Schall ab, so werden im ersten Verarbeitungsschritt des richtungserfassenden Mittels zunächst die empfangenen Signale (beispielsweise Tonsignale oder Videosignale) den entsprechenden Tonquellen zugeordnet. Dies kann bei optischen Mitteln mittles Objekterkennungsalgorithmen erfolgen. Bei akustischen Mitteln können die, mit den vorher beschriebenen Tonaufnahmemitteln getrennt aufgezeichneten Tonsignale der Tonquellen, für die Zuordnung der empfangenen Signale zu den entsprechenden Tonquellen verwendet werden. Bei bekannter Position der Tonquellen kann vorzugsweise die Übertragungsfunktion zwischen den Tonquellen und dem akustischen richtungserfassenden Mittel berücksichtigt werden, sowie die Richtcharakteristiken sowohl des richtungserfassenden Mittels wie auch des Tonaufnahmemittels. Erst nach der Zuordnung der empfangenen Signale zu den zugehörigen Tonquellen wird die Hauptabstrahlrichtung für die einzelnen Tonquellen getrennt ermittelt, wobei hierzu die gleichen vorbeschriebenen Verfahren für eine Tonquelle verwendet werden können.

Die Qualität der Wiedergabe kann dadurch verbessert werden, dass Tonsignale einer Tonquelle, die von nicht der Tonquelle zugeordneten Aufnahmemitteln bzw. richtungserfassenden Mitteln empfangen werden, durch eine akustische Echounterdrückung oder Übersprechunterdrückung (cross talk cancellation) unterdrückt werden. Die Minimierung von akustischen Reflexionen und Nebengeräuschen mit herkömmlichen Mitteln kann ebenfalls dazu beitragen die Wiedergabequalität zu verbessern.

Für die Wiedergabe der Tonsignale kann jeder Tonquelle eine erste Wiedergabeeinheit zugeordnet werden. Die Zuordnung kann dabei entweder 1:1 erfolgen, so dass jede Tonquelle über eine eigene erste Wiedergabeeinheit verfügt, oder so, dass die Tonquellen gruppiert jeweils zu mehreren einer ersten Wiedergabeeinheit zugeordnet sind. Je nach Zuordnung ist die im Wiedergaberaum wiedergegebene räumliche Information mehr oder weniger präzise.

Alternativ zu der oben beschriebenen Wiedergabetechnik kann die Wiedergabe auch durch Wellenfeldsynthese erfolgen. Hierzu muss statt der üblicherweise verwendeten Punktquelle, die Richtcharakteristik der Tonquelle zur Synthetisierung des Schallfeldes berücksichtigt werden. Die zu verwendende Richtcharakteristik wird hierzu vorzugsweise in einer Datenbank bereit gehalten. Die Richtcharakteristik kann beispielsweise eine Messung, eine aus Messungen erhaltene Approximation, oder eine mit einer mathematischen Funktion beschriebene Näherung sein. Ebenso ist es möglich die Richtcharakteristik durch ein Modell zu simulieren, wie beispielsweise mittels richtungsabhängiger Filter, mittels mehrerer Elementarquellen oder einer richtungsabhängigen Anregung. Die Synthetisierung des Schallfeldes mit der entsprechenden Richtcharakteristik wird mittels der erfassten Hauptabstrahlrichtung gesteuert, so dass die Information über die Abstrahlrichtung der Tonquelle in Abhängigkeit der Zeit wiedergegeben wird. Das beschriebene Verfahren kann selbstverständlich auch für mehrere Tonquellen im Aufnahmeraum angewendet werden.

Neben den beiden bisher beschriebenen Wiedergabetechniken kann für die gerichtete Wiedergabe der Tonsignale auch ein aus dem Stand der Technik bekanntes Multi-Lautsprechersystem (multi-speaker display device) verwendet werden, dessen Wiedergabeparameter ebenfalls durch die in Abhängigkeit der Zeit ermittelte Hauptabstrahlrichtung angesteuert wird. Statt der Ansteuerung der Wiedergabeparameter ist auch eine Steuerung eines rotierbaren Mechanismus denkbar. Sind mehrere Tonquellen im Aufnahmeraum vorhanden, kann im Wiedergaberaum für jede Tonquelle ein Multi-Lautsprechersystem zur Verfügung gestellt werden.

Für die gerichtete Wiedergabe der Tonsignale können auch andere aus dem Stand der Technik bekannte Wiedergabeverfahren eingesetzt werden, wobei hierfür deren Wiedergabeparameter entsprechend der in Abhängigkeit der Zeit ermittelten Hauptabstrahlrichtung angesteuert werden müssen.

Der Erfindung liegt weiter die Aufgabe zugrunde, ein System zu schaffen, mit dem die Aufzeichnung, Übertragung und wahrnehmungsnahe Wiedergabe der informationstragenden Eigenschaften der Schallquellen ermöglicht wird.

Die Aufgabe wird gelöst durch ein System zur Aufnahme von Tonsignalen von einer oder mehreren Tonquellen mit zeitlich variablen Richtcharakteristiken mit Tonaufnahmemitteln in einem Aufnahmeraum und zur Wiedergabe der Tonsignale mit Tonwiedergabemitteln in einem Wiedergaberaum, das dadurch gekennzeichnet ist, dass das System Mittel zur Erfassung der Hauptabstrahlrichtungen der von der oder den Tonquellen ausgesendeten Tonsignale in Abhängigkeit von der Zeit und Mittel zur Wiedergabe der übertragenen Tonsignale in Abhängigkeit der erfassten Richtungen aufweist.

Das System kann mindestens zwei einer Tonquelle zugeordnete Tonaufnahmeeinheiten zur Aufnahme der von dieser Tonquelle ausgesandten Tonsignale und deren Hauptabstrahlrichtung aufweisen. Alternativ oder ergänzend hierzu kann das System auch optische Mittel zur Erkennung von deren Hauptabstrahlrichtung aufweisen.

Mittel zur Erkennung der Hauptabstrahlrichtung können z. B. Mikrophone oder Mikrophonarrays oder Mittel zur Videoerfassung, insbesondere mit Mustererkennung, sein.

Die Wiedergabe der Tonsignale kann mit einer der Tonquelle zugeordneten ersten Wiedergabeeinheit und wenigstens einer beabstandet von der ersten Wiedergabeeinheit angeordneten zweiten Wiedergabeeinheit erfolgen. Die Position der ersten Wiedergabeeinheit im Wiedergaberaum kann einer virtuellen Position der Tonquelle im Wiedergaberaum entsprechen.

Die Wiedergabe mit der oder den zweiten Wiedergabeeinheiten kann zur subjektiven Erzeugung einer gerichteten Schallabstrahlung gegenüber der ersten Wiedergabeeinheit mit einer Zeitverzögerung τ erfolgen. Bei mehreren zweiten Wiedergabeeinheiten kann für jede eine individuelle Zeitverzögerung gewählt werden.

Das System kann z. B. zur Tonübertragung in Videokonferenzen eingesetzt werden. Dabei gibt es festgelegte Positionen, an denen sich Teilnehmer der Konferenz aufhalten. In Abhängigkeit von den Teilnehmerpositionen kann die Zeitverzögerung τ der zweiten Wiedergabeeinheit oder -einheiten derart gewählt werden, dass die tatsächliche Zeitverzögerung zwischen den Tonsignalen zumindest an den jeweiligen Teilnehmerpositionen im Wiedergaberaum zwischen 2 ms und 100 ms, vorzugsweise zwischen 5 ms und 80 ms und insbesondere zwischen 10 ms und 40 ms, liegt.

Die Wiedergabe durch die erste und/oder durch die zweite(n) Wiedergabeeinheit(en) kann mit einem reduzierten Pegel, insbesondere mit einem um 1 bis 6 dB und vorzugsweise um 2 bis 4 dB reduzierten Pegel, und/oder insbesondere in Abhängigkeit von der Hauptabstrahlrichtung, erfolgen.

Es versteht sich von selbst, dass das System zur Übertragung der Tonsignale von einer Schallquelle auf die Übertragung der Tonsignale von mehreren Schallquellen ausgeweitet werden kann. Das kann durch einfache Vervielfachung der vorbeschriebenen Mittel erfolgen. Vorteilhaft kann aber eine Reduktion der erforderlichen Mittel derart erfolgen, dass bestimmte Mittel mehreren Schallquellen auf der Aufnahmeseite zugeordnet sind. Alternativ oder ergänzend können auch Wiedergabemittel auf der Wiedergabeseite mehrere Zuodnungen haben. Die oben für das erfindungsgemäße Verfahren geschilderten Zuordnungsmöglichkeiten gelten analog für das System. Insbesondere kann die Anzahl der Tonaufnahmeeinheiten und/oder Tonwiedergabeeinheiten der Anzahl der Tonquellen plus 2 entsprechen.

Weitere Ausführungsformen des Verfahrens und des Systems sind in den Unteransprüchen angegeben.

Die Erfindung wird im Folgenden unter Bezugnahme auf die beigefügten Abbildungen anhand von ausgewählten Beispielen näher beschrieben:
- Fig. 1: zeigt ein Mikrophonarray;
- Fig. 2A und B: erläutern ein vereinfachtes akustisches Verfahren zur Ermittlung der Hauptabstrahlrichtung einer Tonquelle;
- Fig. 3: zeigt die Bestimmung der Hauptabstrahlrichtung einer Tonquelle mit Hilfe eines Referenzschallpegels;
- Fig. 4: zeigt ein Verfahren zur Richtungserfassung bei mehreren Tonquellen im Aufnahmeraum;
- Fig. 5: zeigt ein Verfahren, bei dem ein eigenes richtungserfassendes Mittel für jede Tonquelle verwendet wird;
- Fig. 6: zeigt ein Wiedergabeverfahren für eine Tonquelle mit einer ersten Wiedergabeeinheit und mindestens einer zweiten, beabstandeten Wiedergabeeinheit;
- Fig. 7A und 7B: zeigen verschiedene Methoden zur Realisierung der ersten und zweiten Wiedergabeeinheiten;
- Fig. 8A und 8B: zeigen Wiedergabeverfahren für eine Tonquelle mit einer ersten Wiedergabeeinheit und mehreren zweiten voneinander beabstandeten Wiedergabeeinheiten;
- Fig. 9: zeigt ein Wiedergabeverfahren für mehrere Tonquellen mit überlappenden ersten und zweiten Wiedergabeeinheiten;
- Fig. 10A und 10B: zeigen ein vereinfachtes Wiedergabeverfahren für eine Richtungserfassung nach Fig. 5.

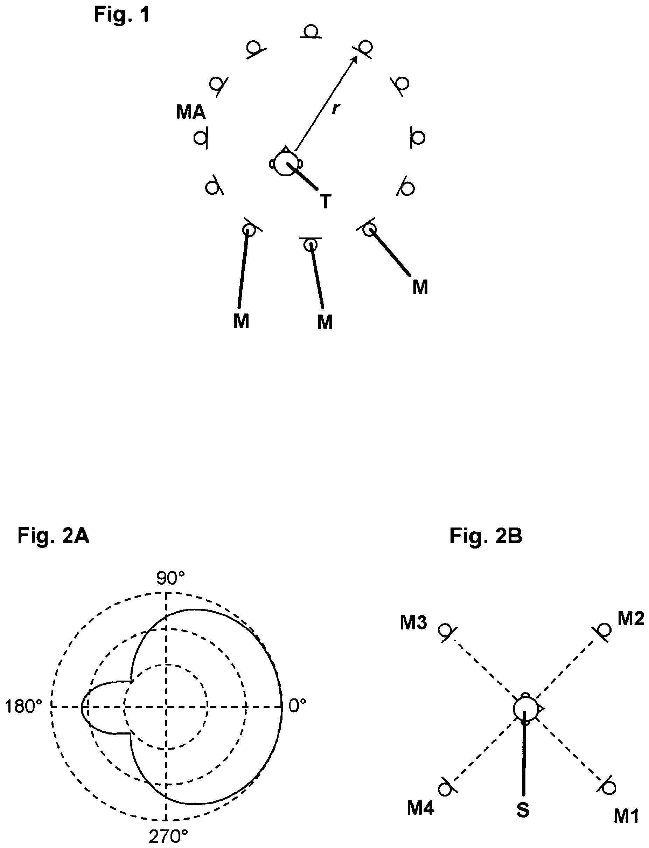

Das in **Figur 1** dargestellte Mikrophonarray **MA** dient zur Erfassung der Hauptabstrahlrichtung einer Tonquelle T im Aufnahmeraum.

Die Hauptabstrahlrichtung einer Tonquelle **T** wird mit einem Mikrophon-Array **MA**, also einer Mehrzahl von miteinander in Verbindung stehenden Einzelmikrophonen **M** ermittelt. Dazu wird die Tonquelle **T** mit diesen Mikrophonen **MA** in beliebiger Form umgeben, beispielsweise ringförmig, wie in Figur 1 dargestellt.

In einem ersten Schritt wird die Position der Tonquelle **T** bezüglich der Mikrophone **M** ermittelt, so dass alle Abstände ***r*** zwischen Tonquelle **T** und Mikrophonen **M** bekannt sind. Die Position der Tonquelle **T** kann beispielsweise durch Messung oder mit einem herkömmlichen Lokalisationsalgorithmus bestimmt werden. Es kann für die Bestimmung der Position vorteilhaft sein, nur die Frequenzbereiche mit entsprechenden Filtern zu berücksichtigen, die keine ausgeprägte Vorzugsrichtung hinsichtlich der Schallabstrahlung haben. Dies gilt in vielen Fällen für tiefe Frequenzbereiche, bei Sprache beispielsweise unterhalb ca. 500 Hz.

Die Hauptabstrahlrichtung der Tonquelle **T** kann aus den erfassten Schallpegeln an den Mikrophonen **M** ermittelt werden, wobei hierzu die unterschiedlichen Schalldämpfungen wie auch Laufzeitunterschiede auf Grund der unterschiedlichen Abstände **r** zwischen den einzelnen Mikrophonen **M** und der Tonquelle **T** berücksichtigt werden. Bei richtungsselektiven Mikrophonen **M** kann auch die Richtcharakteristik der Mikrophone **M** in die Bestimmung der Hauptabstrahlrichtung einfließen.

Desto mehr Richtungen durch Mikrophone erfasst werden, desto präziser kann die Hauptabstrahlrichtung ermittelt werden. Umgekehrt kann die Anzahl der notwendigen Mikrophone verringert werden, (a) wenn die Hauptabstrahlrichtung nur grob erfasst werden soll, beispielsweise kann eine Abstufung in nur 3 oder 5 Stufen voll ausreichen, und entsprechend ist eine Anordnung der richtungserfassenden Mittel in diesen Richtungen ausreichend, oder (b) wenn die Hauptabstrahlrichtung auf einen begrenzten Winkelbereich eingegrenzt ist; beispielsweise wird die Sprechrichtung bei Telekonferenzen normalerweise auf einen nach vorne gerichteten Winkelbereich eingeschränkt sein.

Die Mikrophone können als Mittel zur Richtungserfassung und auch gleichzeitig als Tonaufnahmemittel für die Aufzeichnung der Tonsignale der Tonquelle eingesetzt werden. Anhand der Position der Tonquelle und gegebenenfalls auch anhand der ermittelten Hauptabstrahlrichtung kann eine Gewichtung der Mikrophone bestimmt werden, die den Beitrag der einzelnen Mikrophone zum aufgezeichneten Tonsignal regelt.

Die **Figuren 2A und 2B** zeigen ein gegenüber dem Verfahren aus Figur 1 vereinfachtes akustisches Verfahren zur Ermittlung der Hauptabstrahlrichtung der Tonquelle.

Statt dem relativ aufwändigem Verfahren aus Figur 1 kann auch ein sehr viel einfacheres Verfahren zur Ermittlung der Hauptabstrahlrichtung verwendet werden, das nach dem gleichen Prinzip wie in Figur 1 ebenfalls die Schallpegel in unterschiedlichen Richtungen mit den entsprechenden Korrekturen bestimmt. Die Hauptabstrahlrichtung wird jedoch durch einen Vergleich der erfassten Pegelverhältnisse in den unterschiedlichen Richtungen mit einer vorgegebenen Referenz ermittelt. Liegt die Richtcharakteristik der Tonquelle in Form einer Messung, einer aus Messungen erhaltenen Approximation, einer mathematischen Funktion, einem Model bzw. Simulation oder ähnlich vor, so kann diese als Referenz zur Bestimmung der Hauptabstrahlrichtung eingesetzt werden. Je nach Komplexität der als Referenz gewählten Näherung der Richtcharakteristik der Tonquelle sind dann nur wenige Mikrophone zur Erfassung der Hauptabstrahlrichtung notwendig. Die Genauigkeit und damit Komplexität der Referenz hängt davon ab, wie genau die Hauptabstrahlrichtung ermittelt werden soll; reicht eine grobe Ermittlung der Hauptabstrahlrichtung aus, kann eine sehr vereinfachte Referenz gewählt werden. Die Anzahl und Position der Mikrophone für die Erfassung der Schallpegel in unterschiedlichen Richtungen muss so gewählt werden, dass die damit abgetasteten Richtungen ausreichen, um zusammen mit der Referenz die Lage der Richtcharakteristik der Tonquelle bezüglich der Mikrophone eindeutig zu bestimmen.

Geht man bei Sprachsignalen beispielsweise von einer stark vereinfachten Referenz für die Richtcharakteristik aus, wie beispielhaft in Figur 2A schematisch dargestellt, so kann die Hauptabstrahlrichtung ausreichend genau mit mindestens 3, und vorzugsweise 4 Mikrophonen ermittelt werden, die so positioniert sind, dass sie jeweils einen Winkel von 60° - 120° einschließen. Figur 2B zeigt ein Beispiel bei dem die 4 Mikrophone **M₁** bis **M₄** jeweils einen Winkel von 90° einschließen.

Werden die möglichen Hauptabstrahlrichtungen auf einen bestimmten Winkelbereich eingeschränkt, so kann die in Figur 2A dargestellte Referenz auch noch weiter vereinfacht werden. Beispielsweise kann eine rückwärtsgerichtete Hauptabstrahlrichtung bei Konferenzen ausgeschlossen werden, wenn keine Teilnehmer hintereinander sitzen. In diesem Fall kann die Referenz von Figur 2A so vereinfacht werden, dass die nach hinten zeigende Spitze nicht berücksichtigt wird, d.h. nur von einer annähernd nierenförmigen Richtcharakteristik als Referenz ausgegangen wird. In diesem Fall reichen 2 Mikrophone aus, die einen Winkel von 60° - 120° einschließen, um die Hauptabstrahlrichtung ausreichend genau zu erfassen. Beispielsweise können in Figur 2B die beiden hinter dem Sprecher **S** positionierten Mikrophone **M₃** und **M₄** eingespart werden.

Die Näherung der Richtcharakteristik von Sprache mit einem der beiden vorbeschriebenen Referenzmuster erweist sich für viele Anwendungen als ausreichend, insbesondere für Konferenzanwendungen, bei denen eine relativ grobe Bestimmung der Hauptabstrahlrichtung für eine natürliche Rekonstruktion ausreichend ist. Für eine genauere Bestimmung der Hauptabstrahlrichtung kann bei einer Videokonferenzanwendung zudem noch das oder die optischen Mittel mit Mustererkennung eingesetzt werden. Es ist auch möglich die Bestimmung der Hauptabstrahlrichtung mit vorgeschalteten Frequenzfiltern auf die informationstragenden Frequenzbereiche einzuschränken.

Wie in Figur 1 können die für die Richtungserfassung bestimmten Mikrophone auch gleichzeitig als Tonaufnahmemittel zum Aufzeichnen der Tonsignale der Tonquelle verwendet werden.

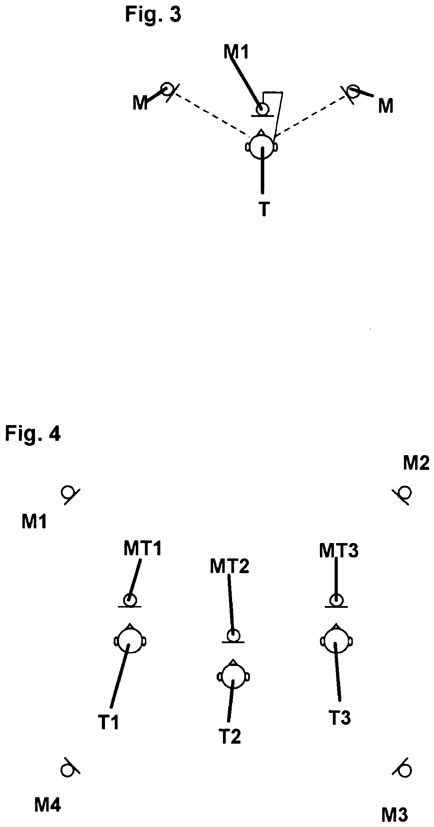

In **Figur 3** ist die Bestimmung der Hauptabstrahlrichtung einer Tonquelle mit Hilfe eines Referenzschallpegels dargestellt. Die Hauptabstrahlrichtung einer Tonquelle **T** kann mit Hilfe einer als Referenz vorliegenden Richtcharakteristik der Tonquelle und einem aktuellen Referenzschallpegel der Tonquelle in einer bekannten Richtung ermittelt werden. Im Vergleich zu dem in Figur 2 erläutertem Verfahren kann mit diesem Verfahren die Hauptabstrahlrichtung auch bei komplexeren Referenzrichtcharakteristiken mit deutlich weniger Mikrophonen **M** ermittelt werden. Anhand des Referenzschallpegels in der bekannten Richtung können die dazu relativen Dämpfungen in die durch die Mikrophone **M** vorgegebenen Richtungen ermittelt werden. Selbstverständlich müssen auch bei diesem Verfahren die notwendigen Korrekturen hinsichtlich dem Abstand der Mikrophone **M** zur Tonquelle **T** und die Richtcharakteristik der Mikrophone berücksichtigt werden. Bei der Korrektur kann auch Wissen über die Geometrie der Umgebung und die damit zusammenhängenden Bedingungen für die Schallausbreitung, wie auch Reflexionseigenschaften einbezogen werden. Ein Vergleich der auf diese Weise ermittelten relativen Dämpfungen mit der als Referenz vorliegenden Richtcharakteristik der Tonquelle **T** ergibt die Hauptabstrahlrichtung.

Der Referenzschallpegel kann beispielsweise mit einem Ansteckmikrophon **M₁** erfasst werden, das den Richtungsänderungen der Tonquelle **T** stets folgt, so dass die Richtung der damit erfassten Tonsignale immer die gleiche und damit bekannt ist. Vorteilhaft ist es, wenn die Richtung des Referenzschallpegels mit der Hauptabstrahlrichtung übereinstimmt. Das Mikrophon **M₁,** das für die Ermittlung des Referenzschallpegels verwendet wird, kann gleichzeitig auch als akustisches Mittel zur Aufzeichnung der Tonsignale eingesetzt werden.

Liegt beispielsweise als Referenz für die Richtcharakteristik eines Sprachsignals die in Figur 2A dargestellte Näherung vor, so kann die Hauptabstrahlrichtung der Tonquelle relativ präzise mit nur 2 richtungserfassenden Mikrophonen **M**, die einen Winkelbereich von ca. 60° - 120° einschließen, und dem Mikrophon **M₁** für die Bestimmung des Referenzschallpegels ermittelt werden.

Auch bei diesem Verfahren kann die Bestimmung der Hauptabstrahlrichtung mit entsprechenden Frequenzfiltern auf die informationstragenden Frequenzbereiche eingeschränkt werden.

In **Figur 4** ist ein Verfahren zur Richtungserfassung bei mehreren Tonquellen im Aufnahmeraum dargestellt. Die einzelnen Hauptabstrahlrichtungen mehrerer Tonquellen **T₁** bis **T₃** im Aufnahmeraum werden mit einem einzigen richtungserfassenden akustischen Mittel, das allen vorhandenen Tonquellen zugeordnet ist, ermittelt.

Sind, wie in Figur 4 dargestellt, mehrere Tonquellen **T** im Aufnahmeraum vorhanden, kann die Bestimmung der Hauptabstrahlrichtung jeder einzelnen Tonquelle mit den gleichen Verfahren wie vorstehend für eine einzelne Tonquelle beschrieben erfolgen. Dazu müssen jedoch die Tonsignale der einzelnen Tonquellen **Tₓ** für deren Richtungserfassung getrennt voneinander vorliegen. Dies ist automatisch der Fall, wenn nur eine Tonquelle zu einem gegebenen Zeitpunkt Schall abstrahlt. Strahlen jedoch zwei oder mehrere Tonquellen zeitgleich Schall ab, müssen die Tonsignale der einzelnen Tonquellen, die alle gleichzeitig von den Mikrophonen **M₁** bis **M₄** des richtungserfassenden Mittel empfangen werden, für deren Richtungserfassung vorher mit einem geeigneten Verfahren voneinander getrennt werden. Die Trennung kann beispielsweise mit einem herkömmlichen Quellentrennungsalgorithmus erfolgen. Besonders einfach lassen sich die Tonsignale den entsprechenden Tonquellen zuordnen, wenn als Referenzsignale die getrennten Tonsignale der Tonquellen bekannt sind. Diese Referenzsignale erhält man zum Beispiel, wenn für die Aufzeichnung der Tonsignale für jede Tonquelle getrennt ein akustisches Mittel, z. B. ein Mikrofon **M_{T1}, M_{T2}** und **M_{T3},** verwendet wird, wie in Figur 4 dargestellt. Alle Tonsignale, die nicht zu der zugeordneten Tonquelle gehören, deren Hauptabstrahlrichtung bestimmt werden soll, werden für die Richtungsbestimmung unterdrückt. Die Trennung der Tonsignale mittels der Referenzsignale kann dadurch verbessert werden, dass auch die unterschiedlichen Übertragungsfunktionen berücksichtigt werden, die sich für die Mikrophone des richtungserfassenden Mittels (**M₁ bis M₄**) und für die zur Aufzeichnung der Tonsignale bestimmten Mittel (**M_{T1}, M_{T2}** und **M_{T3}**) ergeben.

In dem in Figur 4 dargestellten Beispiel erfolgt die getrennte Erfassung der Hauptabstrahlrichtung der einzelnen Tonquellen mit einem richtungserfassenden Mittel nach dem in Figur 2 dargestellten Verfahren. Wie dort dargelegt, kann das richtungserfassende Mittel aus 4 Mikrophonen bestehen, die einen Winkelbereich von ca. 60° - 120° einschließen; aber es ist auch möglich nur die 2 vor den Teilnehmern platzierten Mikrophone zu verwenden.

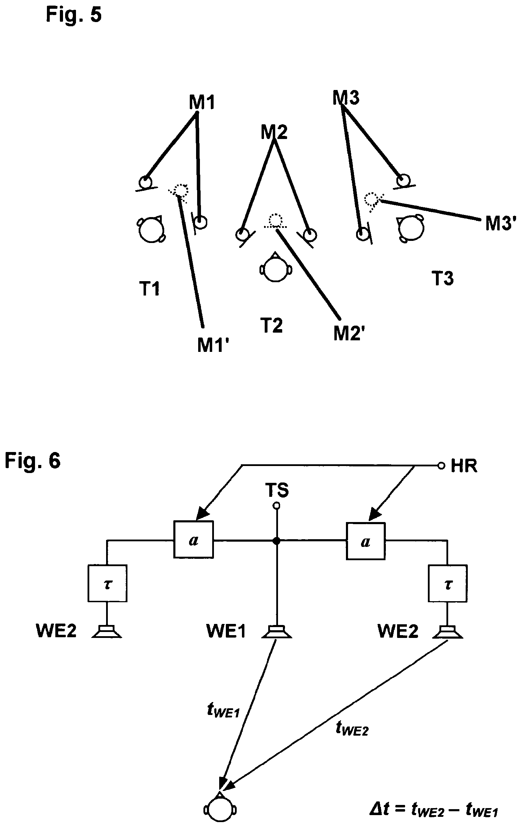

In **Figur 5** ist ein Verfahren dargestellt, bei dem ein eigenes richtungserfassendes akustisches Mittel für jede Tonquelle genutzt wird. Zur Erfassung der Hauptabstrahlrichtungen mehrerer Tonquellen **T₁** bis **T₃** im Aufnahmeraum kann jeder Tonquelle ein eigenes richtungserfassendes Mittel **M₁** bis **M₃** zugeordnet werden. Da jede Tonquelle über ihr eigenes akustisches Mittel für die Richtungserfassung verfügt, ist bei dieser Art von Verfahren keine Trennung der Tonsignale zu den zugehörigen Tonquellen notwendig. Bei dem in Figur 5 dargestellten Beispiel wird die Hauptabstrahlrichtung jeder Tonquelle mit dem im Figur 2 dargestellten Verfahren bestimmt. Da bei vielen Konferenzanwendungen, insbesondere auch bei Videokonferenzen, eine Sprechrichtung nach hinten meistens ausgeschlossen werden kann, reichen 2 Mikrophone aus, um die Hauptabstrahlrichtung einer Tonquelle ausreichend genau zu ermitteln.

Die Aufzeichnung der Tonsignale der Tonquellen erfolgt in Figur 5 wahlweise mit einem zusätzlichen Mikrophon **M₁'** bis **M₃'** pro Tonquelle, das jeder Tonquelle **T₁** bis **T₃** zugeordnet ist, oder die richtungserfassenden Mikrophone **M₁** bis **M₃** werden auch gleichzeitig zur Aufzeichnung der Tonsignale eingesetzt.

In **Figur 6** ist ein Wiedergabeverfahren für eine Tonquelle mit einer ersten Wiedergabeeinheit und mindestens einer zweiten beabstandeten Wiedergabeeinheit dargestellt.

Die im Aufnahmeraum aufgezeichneten Tonsignale **TS** einer Tonquelle können im Wiedergaberaum mit einer der Tonquelle zugeordneten ersten Wiedergabeeinheit **WE1** wiedergegeben werden. Die Position der ersten Wiedergabeeinheit **WE1** kann so gewählt werden, dass sie der virtuellen Position der Tonquelle im Wiedergaberaum entspricht. Bei einer Videokonferenz kann diese virtuelle Position beispielsweise an der Stelle im Raum sein, an der sich die visuelle Repräsentation der Tonquelle befindet.

Zur Vermittlung der Richtungsinformation der Tonwiedergabe wird mindestens eine von der ersten Wiedergabeeinheit beabstandete zweite Wiedergabeeinheit **WE2** verwendet. Vorzugsweise werden zwei zweite Wiedergabeeinheiten verwendet, von denen eine zu einer Seite und die andere zur anderen Seite der ersten Wiedergabeeinheit **WE1** positioniert werden kann. Mit einem derartigen Aufbau lassen sich Änderungen der Hauptabstrahlrichtung der Tonquelle in einem Winkelbereich von 180° um die erste Wiedergabeeinheit simulieren, d.h. um die an dieser Stelle positionierten virtuellen Tonquelle. Die Information über die Abstrahlrichtung kann dadurch vermittelt werden, dass die Wiedergabe mit den zweiten Wiedergabeeinheiten gegenüber der ersten Wiedergabeeinheit verzögert erfolgt. Die Zeitverzögerung *τ* sollte dabei so gewählt werden, dass die tatsächliche Zeitverzögerung ***Δt*** = ***t_{WE2}- t_{WE1}*** zwischen den Tonsignalen zumindest in Teilbereichen des Wiedergaberaumes zwischen 2 ms und 100 ms beträgt, damit bei den Empfängern, d.h. zum Beispiel bei den empfangenden Teilnehmern der Videokonferenz, die sich in diesen Teilbereichen befinden, die tatsächliche Zeitverzögerung zwischen 2 ms und 100 ms liegt.

Die im Aufnahmeraum erfasste Hauptabstrahlrichtung **HR** steuert die Wiedergabepegel an den zweiten Wiedergabeeinheiten über ein Dämpfungsglied a an. Um beispielsweise eine Hauptabstrahlrichtung der Tonquelle zu simulieren, die auf die rechte Seite des Raumes gerichtet ist, werden die Tonsignale zur zweiten Wiedergabeeinheit, die sich links befindet, vollständig gedämpft und nur über die rechte zweite Wiedergabeeinheit verzögert gegenüber der ersten Wiedergabeeinheit wiedergegeben.

Das vorbeschriebene Verfahren kann selbstverständlich auch für mehrere Tonquellen im Aufnahmeraum angewendet werden. Hierzu müssen entsprechend mehr erste und zweite Wiedergabeeinheiten verwendet werden.

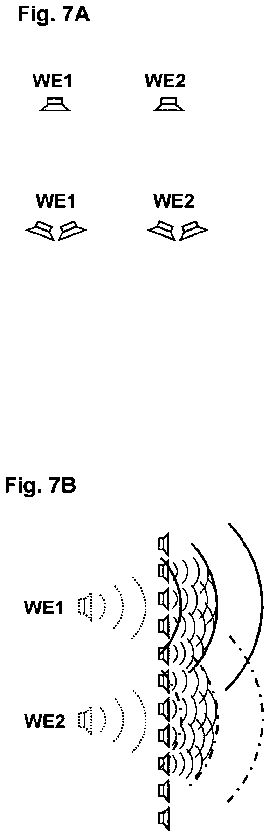

Die **Figuren 7A und 7B** zeigen verschiedene Methoden zur Realisierung der ersten und zweiten Wiedergabeeinheiten.

Die ersten wie auch die zweiten Wiedergabeeinheiten **WE1** und **WE2** können, wie in Figur 7A dargestellt, jeweils mit einem realen Lautsprecher oder einer Lautsprechergruppe an der entsprechenden Position im Raum realisiert werden. Sie können aber auch jeweils mit einer virtuellen Quelle realisiert werden, die beispielsweise mittels Wellenfeldsynthese an der entsprechenden Position platziert wird, wie in Figur 7B dargestellt. Selbstverständlich ist auch eine gemischte Realisierung mit realen und virtuellen Quellen möglich.

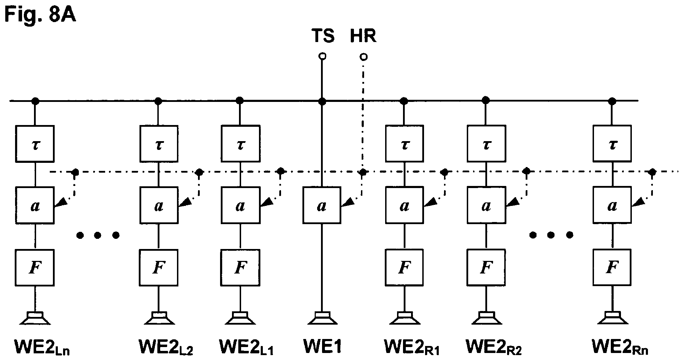

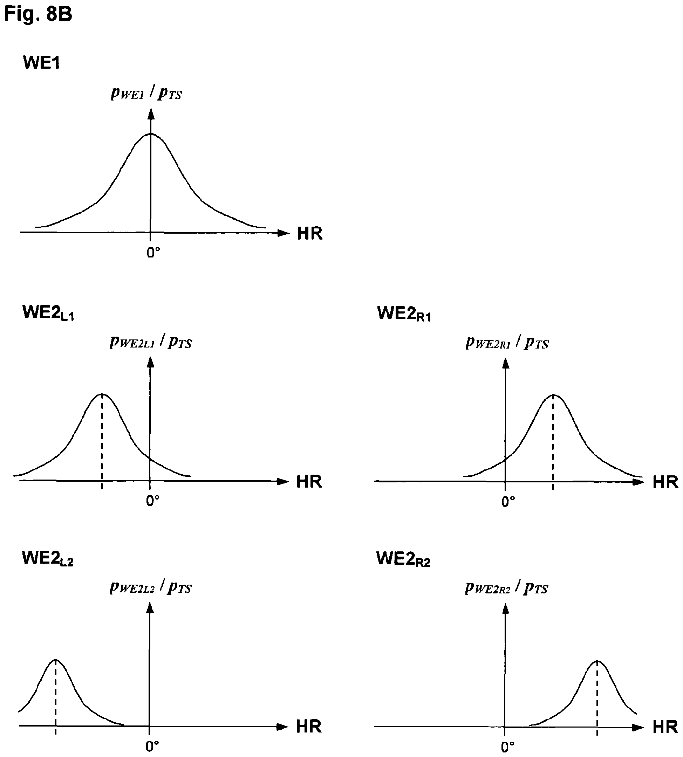

In den **Figuren 8A** **und** **8B** ist ein Wiedergabeverfahren für eine Tonquelle mit einer ersten Wiedergabeeinheit und mehreren zweiten, voneinander beabstandeten Wiedergabeeinheiten gezeigt.

Das in Figur 6 erläuterte Grundverfahren kann mit den nachfolgend erläuterten Ergänzungen erweitert werden, um die Richtungsinformation der Tonquelle möglichst wahrnehmungsgetreu wiederzugegeben.

Zum einen ist es möglich statt jeweils einer zweiten Wiedergabeeinheit auf jeder Seite der ersten Wiedereinheit **WE1**, mehrere voneinander beabstandete zweite Wiedergabeeinheiten **WE2** zu verwenden, wie in Figur 8A dargestellt. Die Verzögerungen *τ* zu den einzelnen Wiedergabeeinheiten **WE2** können individuell für jede Wiedergabeeinheit gewählt werden. Beispielsweise ist es besonders vorteilhaft mit zunehmendem Abstand der Wiedergabeeinheiten **WE2** von der Wiedergabeeinheit **WE1** die entsprechenden Verzögerungen kürzer zu wählen. Hierbei muss, wie zu Figur 6 erklärt, beachtet werden, dass die tatsächliche Zeitverzögerung zwischen den Tonsignalen zumindest in Teilbereichen des Wiedergaberaumes zwischen 2 ms und 100 ms, vorzugsweise zwischen 5 ms und 80 ms, und insbesondere zwischen 20 ms und 40 ms beträgt.

Wie in Figur 8A dargestellt, kann entsprechend der zu simulierenden Richtcharakteristik der Tonquelle das Tonsignal **TS** vor der Wiedergabe durch die zweite(n) Wiedergabeeinheit(en) **WE2** zusätzlich mit einem Filter ***F*** bearbeitet werden, beispielsweise einem Hochpass-, Tiefpass- oder Bandpassfilter.

Für eine möglichst wahrnehmungsgetreue Wiedergabe der Abstrahlrichtung kann auch der Wiedergabepegel der ersten und zweiten Wiedergabeeinheiten in Abhängigkeit der zu simulierenden Richtcharakteristik angepasst werden. Die Wiedergabepegel werden hierzu mittels eines Dämpfungsgliedes ***a*** so eingestellt, dass die sich aus der Richtcharakteristik ergebenden wahrnehmbaren Lautheitsunterschiede an verschiedenen Zuhörerpositionen entsprechend angenähert werden. Die derart ermittelten Dämpfungen für die einzelnen Wiedergabeeinheiten können für unterschiedliche Hauptabstrahlrichtungen **HR** definiert und abgespeichert werden. Bei einer Tonquelle mit zeitlich variabler Richtcharakteristik steuert dann die erfasste Hauptabstrahlrichtung die Wiedergabepegel der einzelnen Wiedergabeeinheiten.

In Figur 8B sind schematisch als Beispiel die Dämpfungsfunktionen für eine erste und jeweils zwei zweite Wiedergabeeinheiten auf jeder Seite der ersten Wiedergabeeinheit (**WE1, WE2_{L1}, WE2_{L2}, WE2_{R1}, WE2_{R2}**) in Abhängigkeit der Hauptabstrahlrichtung **HR** dargestellt, wie sie für die Ansteuerung der gerichteten Wiedergabe abgespeichert vorliegen können. Der Einfachheit halber sind statt der logarithmischen Pegelwerte, der Schalldruck der entsprechenden Wiedergabeeinheit im Verhältnis zum Schalldruck des Tonsignals ***p_{TS}*** dargestellt. In Abhängigkeit der erfassten und übertragenen Hauptabstrahlrichtung **HR** werden die Dämpfungsglieder ***a*** der jeweiligen Wiedergabeeinheiten entsprechend der abgespeicherten Vorgabe eingestellt. Bei dem gewählten Beispiel ist darauf zu achten, dass für jede mögliche Hauptabstrahlrichtung der Pegelwert der ersten Wiedergabeeinheit entweder größer oder gleich den entsprechenden Pegelwerten der zweiten Wiedergabeeinheiten ist, oder höchstens 10 dB, bzw. besser 3 bis 6 dB kleiner als die entsprechenden Pegelwerte der zweiten Wiedergabeeinheiten ist.

Das vorbeschriebene Verfahren kann selbstverständlich auch für mehrere Tonquellen im Aufnahmeraum angewendet werden. Hierzu müssen entsprechend mehr erste und zweite Wiedergabeeinheiten verwendet werden.

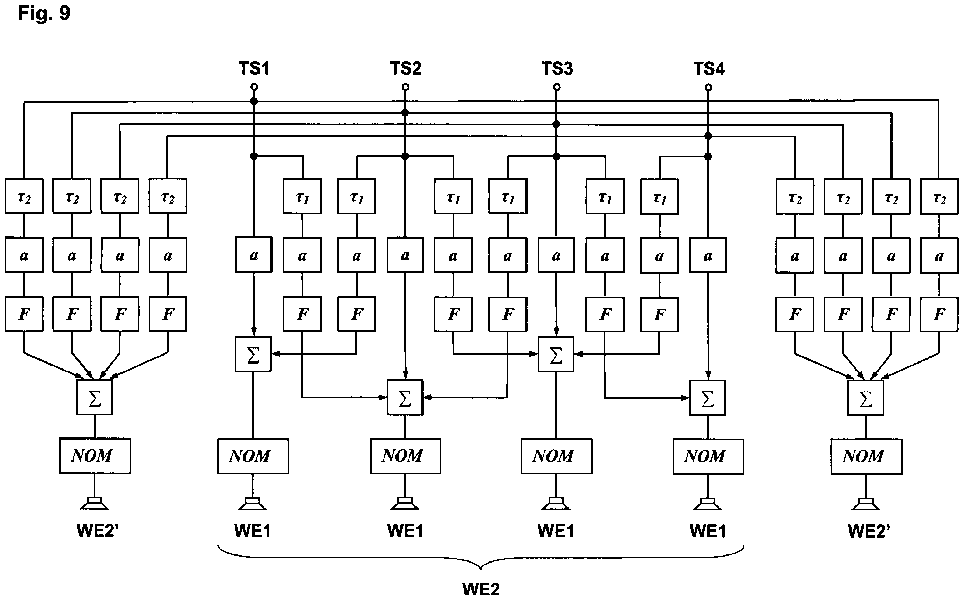

In **Figur 9** ist ein Wiedergabeverfahren für mehrere Tonquellen mit überlappenden ersten und zweiten Wiedergabeeinheiten gezeigt.

Sind mehrere Tonquellen im Aufnahmeraum vorhanden, können die Tonsignale der Tonquellen, wie zu den Figuren 6 und 8 erläutert, mit ersten und zweiten Wiedergabeeinheiten im Wiedergaberaum wiedergegeben werden. Die Anzahl der notwendigen Wiedergabeeinheiten kann jedoch deutlich verringert werden, wenn man nicht für jede Tonquelle eigene erste und zweite Wiedergabeeinheiten vorsieht. Stattdessen können die Wiedergabeeinheiten gleichzeitig sowohl als erste und zweite Wiedergabeeinheiten für unterschiedliche Tonquellen dienen. Besonders vorteilhaft ist es, jeder Tonquelle eine erste Wiedergabeeinheit zuzuordnen, die sich an der virtuellen Position der jeweiligen Tonquelle im Wiedergaberaum befindet. Als zweite Wiedergabeeinheiten für eine Tonquelle können dann die ersten Wiedergabeeinheiten der benachbarten Tonquellen verwendet werden. Zusätzlich können auch noch Wiedergabeeinheiten eingesetzt werden, die ausschließlich als zweite Wiedergabeeinheiten für alle oder wenigstens für einen Teil der Tonquellen dienen.

In Figur 9 ist ein Beispiel mit vier Tonquellen gezeigt, bei dem jeder Tonquelle eine erste Wiedergabeeinheit und auf jeder Seite der ersten Wiedergabeeinheit, bis auf zwei Ausnahmen, noch zwei zweite Wiedergabeeinheiten zugeordnet sind. Die Tonsignale **TS1**, **TS2**, **TS3** und **TS4** der vier Tonquellen werden mit den ihnen zugeordneten ersten Wiedergabeeinheiten **WE1** wiedergegeben, die an den entsprechenden virtuellen Positionen der Tonquellen im Wiedergaberaum platziert sind. Die ersten Wiedergabeeinheiten **WE1** dienen außerdem gleichzeitig als zweite Wiedergabeeinheiten **WE2** für die benachbarten Tonquellen. Die Zeitverzögerungen *τ₁* dieser zweiten Wiedergabeeinheiten werden vorzugsweise so gewählt, dass die tatsächlichen Zeitverzögerungen zwischen den Tonsignalen zumindest in Teilbereichen des Wiedergaberaumes zwischen 5 ms und 20 ms betragen. Zusätzlich sind noch zwei zweite Wiedergabeeinheiten **WE2'** in diesem Beispiel vorgesehen, die ausschließlich als zweite Wiedergabeeinheiten für alle vier Tonquellen dienen. Die Zeitverzögerungen *τ₂* dieser zweiten Wiedergabeeinheiten werden so eingestellt, dass die tatsächlichen Zeitverzögerungen zwischen den Tonsignalen bei den Empfängern d.h. zum Beispiel bei den empfangenden Teilnehmern einer Videokonferenz, im Wiedergaberaum zwischen 20 ms und 40 ms liegen.

Wie in Figur 8 dargestellt steuern die im Aufnahmeraum erfassten Hauptabstrahlrichtungen **HR** der Tonquellen die Wiedergabepegel der ersten und zweiten Wiedergabeeinheiten über die jeweiligen Dämpfungsglieder ***a*** an. Selbstverständlich ist es auch möglich die Tonsignale zusätzlich mit einem Filter ***F*** zu bearbeiten, wobei das Filter individuell für jedes Tonsignal oder für jede Wiedergabeeinheit **WE2** bzw. **WE2'** gewählt werden kann. Da die Anzahl der über eine Wiedergabeeinheit wiedergegebenen, aufsummierten Tonsignale variieren kann, ist es vorteilhaft, den Wiedergabepegel entsprechend der aktuellen Anzahl mit einem Normalisierungsglied ***NOM*** zu normalisieren.

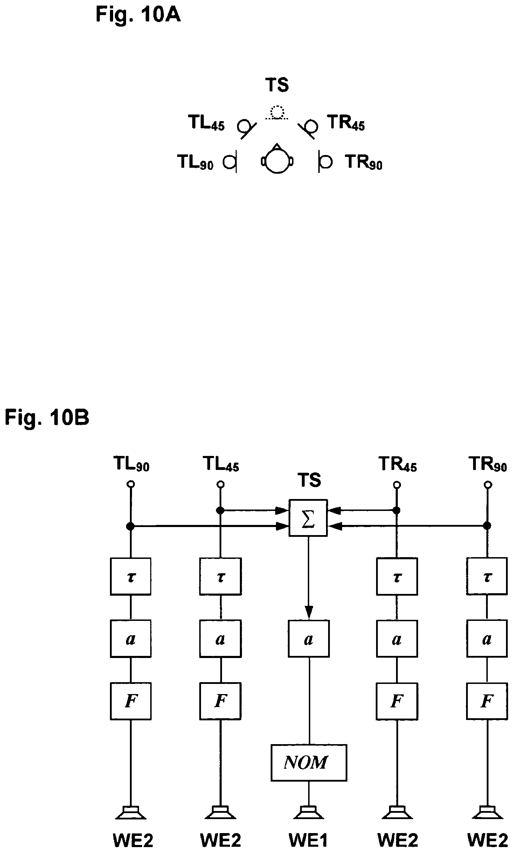

Die **Figuren 10A und 10B** zeigen ein vereinfachtes Wiedergabeverfahren für eine Richtungserfassung nach Figur 5. Jeder Tonquelle ist dabei ein eigenes, richtungserfassendes akustisches Mittel zugeordnet.

Wie zu Figur 5 erläutert, kann zur Erfassung der Hauptabstrahlrichtungen mehrerer Tonquellen im Aufnahmeraum jeder Tonquelle ein richtungserfassendes Mittel zugeordnet werden. In diesem Fall kann die Wiedergabe der Abstrahlrichtungen - mittels erster und zweiter Wiedergabeeinheiten - direkt mit den in verschiedenen Richtungen erfassten Tonsignalen der entsprechenden Tonquelle erfolgen. Im nachfolgenden Ausführungsbeispiel ist dieses Wiedergabeverfahren beispielhaft anhand einer Tonquelle erläutert. Für mehrere Tonquellen muss das Verfahren nach dem gleichen Prinzip entsprechend erweitert werden, wobei die im Beispiel 9 erläuterte Technik der überlappenden Wiedergabeeinheiten eingesetzt werden kann, um die notwendige Anzahl der ersten und zweiten Wiedergabeeinheiten zu reduzieren.

In **Figur 10A** ist die Tonquelle mit den ihr zugeordneten Mitteln zur Erfassung der Hauptabstrahlrichtung und dem optionalen Mikrophon zur Aufzeichnung des Tonsignals **TS** im Aufnahmeraum dargestellt. Zur Erfassung der Abstrahlrichtung werden in diesem Beispiel vier Mikrophone verwendet, die die Tonsignale **TR₉₀, TR₄₅, TL₉₀** und **TL₄₅** aufzeichnen. Für die Aufzeichnung des Tonsignals **TS** der Tonquelle kann entweder ein eigenes Mikrophon zur Verfügung gestellt werden, oder das Tonsignal wird aus den aufgezeichneten Tonsignalen der richtungserfassenden Mittel bei der Wiedergabe gebildet, wie in Figur 10B dargestellt.

In **Figur 10B** ist das Wiedergabeverfahren mittels erster und zweiter Wiedergabeeinheiten dargestellt. Zur Vermittlung der Richtungsinformation werden direkt die mit den richtungserfassenden Mitteln aufgezeichneten Tonsignale **TR₉₀, TR₄₅, TL₉₀** und **TL₄₅** über die entsprechenden zweiten Wiedergabeeinheiten **WE2** verzögert zum Tonsignal **TS** wiedergegeben. Die Zeitverzögerungen *τ* können, wie in den vorangegangenen Beispielen erläutert, gewählt werden. Da die richtungsabhängigen Pegelunterschiede bereits in den aufgezeichneten Tonsignalen der richtungserfassenden Mittel enthalten sind, ist die Pegelsteuerung der zweiten Wiedergabeeinheiten durch die Hauptabstrahlrichtung nicht notwendig; die Dämpfungsglieder a sind daher nur optional. Die Tonsignale können zusätzlich entsprechend der zu simulierenden Richtcharakteristik vor der Wiedergabe durch die zweiten Wiedergabeeinheiten **WE2** mit einem Filter ***F*** bearbeitet werden.

Die Wiedergabe des Tonsignals **TS** der Tonquelle erfolgt über die erste Wiedergabeeinheit. Das Tonsignal **TS** kann hierbei entweder das mit einem eigenen Mikrophon aufgezeichnete Tonsignal sein, oder es wird aus den Tonsignalen **TR₉₀, TR₄₅, TL₉₀** und **TL₄₅** gebildet, indem z.B. das größte dieser Tonsignale oder die Summe der vier Tonsignale verwendet wird. In Figur 10B ist als Beispiel die Summenbildung dargestellt.

Die Klangqualität des erläuterten Wiedergabeverfahrens kann zwar durch Kammfiltereffekte beeinträchtigt sein; dennoch kann das Verfahren auf Grund seiner Einfachheit in manchen Anwendungen durchaus von Vorteil sein.

## Patentansprüche

1. Verfahren zur Aufnahme von Tonsignalen (TS, TS1, TS2, TS3, TS4, TR₉₀, TR₄₅, TL₉₀, TL₄₅) von einer in einem Aufnahmeraum angeordneten Tonquelle (T, S, T₁, T₂, T₃, T_{X}) mit zeitlich variabler Richtcharakteristik mit Tonaufnahmemitteln und zur Wiedergabe der Tonsignale mit Tonwiedergabemitteln in einem Wiedergaberaum, **dadurch gekennzeichnet, dass** die Hauptabstrahlrichtung der von der Tonquelle ausgesendeten Tonsignale in Abhängigkeit von der Zeit erfasst wird und die Wiedergabe in Abhängigkeit der erfassten Hauptabstrahlrichtung (HR) erfolgt, wobei die Wiedergabe der Tonsignale mit einer der Tonquelle zugeordneten ersten Wiedergabeeinheit (WE1) und wenigstens einer beabstandet von der ersten Wiedergabeeinheit angeordneten zweiten Wiedergabeeinheit (WE2, WE2_{L1}, WE2_{L2}, WE2_{R1}, WE2_{R2}, WE2') erfolgt und die Wiedergabe mit der oder den zweiten Wiedergabeeinheiten gegenüber der ersten Wiedergabeeinheit mit Zeitverzögerung oder Zeitverzögerungen τ erfolgt.

2. Verfahren nach Anspruch 1, **dadurch gekennzeichnet, dass** die Tonsignale (TS, TS1, TS2, TS3, TS4, TR₉₀, TR₄₅, TL₉₀, TL₄₅) der Tonquelle (T, S, T₁, T₂, T₃, T_{X}) von einem Tonaufnahmemittel (M, M₁, M₂, M₃, M₄, M_{T1}, M_{T2}, M_{T3}, M₁', M₂', M₃', MA) aufgenommen werden, und die Hauptabstrahlrichtung (HR) der ausgesendeten Tonsignale von Mitteln zur Richtungserfassung erfasst wird.

3. Verfahren nach Anspruch 2, **dadurch gekennzeichnet, dass** die Mittel zur Richtungserfassung akustischer Art sind, insbesondere Mikrophone (M, M_{1'} M₂, M₃, M₄, M_{T1}, M_{T2}, M_{T3}, M₁', M₂', M₃') und/oder ein oder mehrere Mikrophonarrays (MA).

4. Verfahren nach Anspruch 2 oder 3, **dadurch gekennzeichnet, dass** die Mittel zur Richtungserfassung optischer Art sind, insbesondere eine Videoerfassung mit Mustererkennung.

5. Verfahren nach einem der Ansprüche 1 bis 4, **dadurch gekennzeichnet, dass** die Position der ersten Wiedergabeeinheit (WE1) im Wiedergaberaum einer virtuellen Position der Tonquelle (T, S, T₁, T₂, T₃, T_{X}) im Wiedergaberaum entspricht.

6. Verfahren nach einem der Ansprüche 1 bis 5, **dadurch gekennzeichnet, dass** die Zeitverzögerungen τ derart gewählt werden, dass die Zeitverzögerungen zwischen den Tonsignalen (TS, TS1, TS2, TS3, TS4, TR₉₀, TR₄₅, TL₉₀, TL₄₅) zumindest in Teilbereichen des Wiedergaberaums zwischen 2 ms und 100 ms, vorzugsweise zwischen 5 ms und 80 ms und insbesondere zwischen 10 ms und 40 ms, beträgt.

7. Verfahren nach einem der Ansprüche 1 bis 6, **dadurch gekennzeichnet, dass** die Wiedergabe durch die erste und/oder durch die zweite(n) Wiedergabeeinheit(en) (WE1, WE2, WE2_{L1}, WE2_{L2}, WE2_{R1}, WE2_{R2}, WE2') mit einem reduzierten Pegel, insbesondere mit einem um 1 bis 6 dB und vorzugsweise um 2 bis 4 dB reduzierten Pegel, und/oder insbesondere in Abhängigkeit von der Hauptabstrahlrichtung (HR), erfolgt.

8. Verfahren nach einem der Ansprüche 1 bis 7, **dadurch gekennzeichnet, dass** die Wiedergabeeinheiten (WE1, WE2, WE2_{L1}, WE2_{L2}, WE2_{R1}, WE2_{R2}, WE2') Lautsprecher oder eine Gruppe von Lautsprechern, ein Lautsprecherarray oder eine Kombination hieraus oder eine virtuelle Quelle, insbesondere eine durch Wellenfeldsynthese erzeugte virtuelle Quelle, sind.

9. Verfahren nach einem der Ansprüche 1 bis 8, **dadurch gekennzeichnet, dass** Tonsignale (TS, TS1, TS2, TS3, TS4, TR₉₀, TR₄₅, TL₉₀, TL₄₅) von mehreren im Aufnahmeraum angeordneten Tonquellen (T, S, T₁, T₂, T₃, T_{X}) aufgenommen und im Wiedergaberaum wiedergegeben werden.

10. Verfahren nach Anspruch 9, **dadurch gekennzeichnet, dass** jeder Tonquelle (T, S, T₁, T₂, T₃, T_{X}) Tonaufnahmemittel zugeordnet sind.

11. Verfahren nach Anspruch 10, **dadurch gekennzeichnet, dass** Tonsignale (TS, TS1, TS2, TS3, TS4, TR₉₀, TR₄₅, TL₉₀, TL₄₅) einer Tonquelle (T, S, T₁, T₂, T₃, T_{X}), die von nicht der Tonquelle zugeordneten Aufnahmemitteln empfangen werden, durch eine Echounterdrückung oder Übersprechunterdrückung (cross talk cancellation) unterdrückt werden.

12. System zur Aufnahme von Tonsignalen (TS, TS1, TS2, TS3, TS4, TR₉₀, TR₄₅, TL₉₀, TL₄₅) von einer oder mehreren Tonquellen (T, S, T₁, T₂, T₃, T_{X}) mit zeitlich variablen Richtcharakteristiken mit Tonaufnahmemitteln in einem Aufnahmeraum und zur Wiedergabe der Tonsignale mit Tonwiedergabemitteln in einem Wiedergaberaum, **dadurch gekennzeichnet, dass** das System Mittel zur Erfassung der Hauptabstrahlrichtungen der von der oder den Tonquellen ausgesendeten Tonsignale in Abhängigkeit von der Zeit und Mittel zur Wiedergabe der übertragenen Tonsignale in Abhängigkeit der erfassten Hauptabstrahlrichtungen aufweist.

13. System nach Anspruch 12, **dadurch gekennzeichnet, dass** das System mindestens zwei einer Tonquelle (T, S, T₁, T₂, T₃, T_{X}) zugeordnete Tonaufnahmeeinheiten zur Aufnahme der von dieser Tonquelle ausgesandten Tonsignale (TS, TS1, TS2, TS3, TS4, TR₉₀, TR₄₅, TL₉₀, TL₄₅) und deren Hauptabstrahlrichtung aufweist.

14. System nach Anspruch 12, **dadurch gekennzeichnet, dass** das System mindestens eine einer Tonquelle (T, S, T₁, T₂, T₃, T_{X}) zugeordnete Tonaufnahmeeinheit zur Aufnahme der von dieser Tonquelle ausgesandten Tonsignale (TS, TS1, TS2, TS3, TS4, TR₉₀, TR₄₅, TL₉₀, TL₄₅) und optische Mittel zur Erkennung von deren Hauptabstrahlrichtung aufweist.

15. System nach einem der Ansprüche 12 bis 14, **dadurch gekennzeichnet, dass** die Anzahl der Tonaufnahmeeinheiten und/oder Tonwiedergabeeinheiten der Anzahl der Tonquellen (T, S, T₁, T₂, T₃, T_{X}) plus 2 entspricht.

16. System nach einem der Ansprüche 12 bis 15, **dadurch gekennzeichnet, dass** die Tonwiedergabeeinheiten Lautsprecher oder eine Gruppe von Lautsprechern, ein Lautsprecherarray oder eine Kombination hieraus oder eine virtuelle Quelle, insbesondere eine durch Wellenfeldsynthese erzeugte virtuelle Quelle, sind.

## Claims

1. Method for recording sound signals (TS, TS1, TS2, TS3, TS4, TR₉₀, TR₄₅, TL₉₀, TL₄₅) of a sound source (T, S, T₁, T₂, T₃, T_{X}) with time variable directional characteristics arranged in a recording space with sound recording means and for reproducing the sound signals in an area of reproduction using sound reproduction means, **characterised in that** the main direction of emission of the sound signals emitted by the sound source is detected in a time variable manner and the reproduction takes place in a manner dependent on the detected main direction of emission (HR), wherein the reproduction of the sound signals takes place using a first reproduction unit (WE1) associated with the sound source and at least one second reproduction unit (WE2, WE2_{L1}, WE2_{L2}, WE2_{R1}, WE2_{R2}, WE2') spaced apart from the first reproduction unit, and the reproduction takes place with the second reproduction unit or units with time delay or delays τ relative to the first reproduction unit.

2. Method according to claim 1, **characterised in that** the sound signals (TS, TS1, TS2, TS3, TS4, TR₉₀, TR₄₅, TL₉₀, TL₄₅) of the sound source (T, S, T₁, T₂, T₃, Tx) are recorded by a sound recording means (M, M₁, M₂, M₃, M₄, M_{T1}, M_{T2}, M_{T3}, M₁', M₂', M₃', MA), and the main direction of emission (HR) of the emitted sound signals is detected by means for detecting direction.

3. Method according to claim 2, **characterised in that** the means for detecting direction are of an acoustic type, in particular microphones (M, M₁, M₂, M₃, M₄, M_{T1}, M_{T2}, M_{T3}, M₁', M₂', M₃') and/or one or more microphone arrays (MA).

4. Method according to claim 2 or 3, **characterised in that** the means for detecting direction are of an optical type, in particular a video detection process with pattern recognition.

5. Method according to one of the claims 1 to 4, **characterised in that** the position of the first reproduction unit (WE1) in the area of reproduction corresponds to a virtual position of the sound source (T, S, T₁, T₂, T₃, Tx) in the area of reproduction.

6. Method according to one of the claims 1 to 5, **characterised in that** the time delays τ are chosen in such a way that the time delays between the sound signals (TS, TS1, TS2, TS3, TS4, TR₉₀, TR₄₅, TL₉₀, TL₄₅) at least in subregions of the area of reproduction lie between 2 ms and 100 ms, preferably between 5 ms and 80 ms and in particular between 10 ms and 40 ms.

7. Method according to one of the claims 1 to 6, **characterised in that** the reproduction using the first and/or the second reproduction unit(s) (WE1, WE2, WE2_{L1}, WE2_{L2}, WE2_{R1}, WE2_{R2}, WE2') is carried out at a reduced level, in particular at a level reduced by 1 to 6 dB and preferably by 2 to 4 dB, and/or in particular depending on the main direction of emission (HR).

8. Method according to one of the claims 1 to 7, **characterised in that** the reproduction units (WE1, WE2, WE2_{L1}, WE2_{L2}, WE2_{R1}, WE2_{R2}, WE2') are loudspeakers or a group of loudspeakers, a loudspeaker array or a combination thereof or a virtual source, in particular a virtual source generated by wave field synthesis.

9. Method according to one of the claims 1 to 8, **characterised in that** the sound signals (TS, TS1, TS2, TS3, TS4, TR₉₀, TR₄₅, TL₉₀, TL₄₅) of multiple sound sources (T, S, T₁, T₂, T₃, Tx) arranged in the recording space are recorded and are reproduced in the area of reproduction.

10. Method according to claim 9, **characterised in that** sound recording means are associated with each sound source (T, S, T₁, T₂, T₃, Tx).

11. Method according to claim 10, **characterised in that** sound signals (TS, TS1, TS2, TS3, TS4, TR₉₀, TR₄₅, TL₉₀, TL₄₅) from a sound source (T, S, T₁, T₂, T₃, Tx) which are received by recording means that are not associated with the sound source, are suppressed using acoustic echo cancellation or cross talk cancellation.

12. System for recording sound signals (TS, TS1, TS2, TS3, TS4, TR₉₀, TR₄₅, TL₉₀, TL₄₅) from one or more sound sources (T, S, T₁, T₂, T₃, T_{X}) with time variable directional characteristics with sound recording means in a recording space and for reproducing the sound signals with sound reproduction means in an area of reproduction, **characterised in that** the system has means for detecting, in a time dependent manner, the main directions of emission of the sound signals emitted by the sound source(s) and means for reproducing the transmitted sound signals in dependence on the detected main directions of emission.

13. System according to claim 12, **characterised in that** the system has at least two sound recording units associated with a sound source (T, S, T₁, T₂, T₃, Tx) for recording the sound signals (TS, TS1, TS2, TS3, TS4, TR₉₀, TR₄₅, TL₉₀, TL₄₅) emitted by this sound source and the main direction of emission thereof.

14. System according to claim 12, **characterised in that** the system has at least one sound recording unit associated with a sound source (T, S, T₁, T₂, T₃, Tx) for recording the sound signals (TS, TS1, TS2, TS3, TS4, TR₉₀, TR₄₅, TL₉₀, TL₄₅) emitted by this sound source and optical means for detecting the main direction of emission thereof.

15. System according to one of the claims 12 to 14, **characterised in that** the number of the sound recording units and/or sound reproduction units corresponds to the number of the sound sources (T, S, T₁, T₂, T₃, T_{X}) plus 2.

16. System according to one of the claims 12 to 15, **characterised in that** the sound reproduction units are a loudspeaker or a group of loudspeakers, a loudspeaker array or a combination thereof or a virtual source, in particular a virtual source generated by wave field synthesis.

## Revendications

1. Procédé pour enregistrer des signaux sonores (TS, TS1, TS2, TS3, TS4, TR₉₀, TR₄₅, TL₉₀, TL₄₅) d'une source sonore (T, S, T₁, T₂, T₃, T_{X}) présentant des caractéristiques directives variables dans le temps, placée dans un espace d'enregistrement avec des moyens pour enregistrer des signaux sonores et pour la reproduction des signaux sonores dans un espace de reproduction en utilisant des moyens de reproduction, **caractérisé en ce que** la direction d'émission principale des signaux sonores émises par la source sonore est détectée en fonction du temps et la reproduction se passe en fonction de la direction principale d'émission détectée (HR), où la reproduction des signaux sonores se passe en utilisant une première unité de reproduction (WE1) associée à la source sonore et au moins une seconde unité de reproduction (WE2, WE2_{L1}, WE2_{L2}, WE2_{R1}, WE2_{R2}, WE2') agencée distante de la première unité de reproduction, et la reproduction avec la ou les seconde(s) unité(s) de reproduction se passe avec une temporisation τ relatif à la première unité de reproduction.

2. Procédé selon la revendication 1, **caractérisé en ce que** les signaux sonores (TS, TS1, TS2, TS3, TS4, TR₉₀, TR₄₅, TL₉₀, TL₄₅) de la source sonore (T, S, T₁, T₂, T₃, Tx) sont enregistrés par un moyen d'enregistrement de signaux sonores (M, M₁, M₂, M₃, M₄, M_{T1}, M_{T2}, M_{T3}, M₁', M₂', M₃', MA) et la direction principale d'émission (HR) des signaux sonores émises est détectée par des moyens de détection de direction.

3. Procédé selon la revendication 2, **caractérisé en ce que** les moyens de détection de direction sont du type acoustique, en particulier des microphones (M, M₁, M₂, M₃, M₄, M_{T1}, M_{T2}, M_{T3}, M₁', M₂', M₃') et/ou un ou plusieurs réseau(x) de microphones (MA).

4. Procédé selon l'une des revendications 2 ou 3, **caractérisé en ce que** les moyens de détection de direction sont du type optique, en particulier la détection vidéo et la reconnaissance de motifs.

5. Procédé selon l'une quelconque des revendications 1 à 4, **caractérisé en ce que** la position de la première unité de reproduction (WE1) dans l'espace de reproduction correspond à une position virtuelle de la source sonore (T, S, T₁, T₂, T₃, Tx) dans l'espace de reproduction.

6. Procédé selon l'une quelconque des revendications 1 à 5, **caractérisé en ce que** les temporisations τ sont choisies tellement que les temporisations entre les signaux sonores (TS, TS1, TS2, TS3, TS4, TR₉₀, TR₄₅, TL₉₀, TL₄₅) sont au moins dans des sections de l'espace de reproduction entre 2 ms et 100 ms, de préférence entre 5 ms et 80 ms et en particulier entre 10 ms et 40 ms.

7. Procédé selon l'une quelconque des revendications 1 à 6, **caractérisé en ce que** la reproduction par la première et/ou la ou les seconde(s) unité(s) de reproduction (WE1, WE2, WE2_{L1}, WE2_{L2}, WE2_{R1}, WE2_{R2}, WE2') est effectuée avec un niveau réduit, notamment avec un niveau réduit de 1 à 6 dB et de préférence de 2 à 4 dB, et/ou notamment en fonction de la direction principale d'émission (HR).

8. Procédé selon l'une quelconque des revendications 1 à 7, **caractérisé en ce que** les unités de reproduction (WE1, WE2, WE2_{L1}, WE2_{L2}, WE2_{R1}, WE2_{R2}, WE2') sont des haut-parleurs ou un ensemble de haut-parleurs, un réseau de haut-parleurs ou une combinaison des dits dispositifs ou une source virtuelle, notamment une source virtuelle crée par synthèse de front d'onde.

9. Procédé selon l'une quelconque des revendications 1 à 8, **caractérisé en ce que** les signaux sonores (TS, TS1, TS2, TS3, TS4, TR₉₀, TR₄₅, TL₉₀, TL₄₅) de multiples sources sonores (T, S, T₁, T₂, T₃, Tx) agencées dans l'espace d'enregistrement sont enregistrés et reproduits dans l'espace de reproduction.

10. Procédé selon la revendication 9, **caractérisé en ce que** des moyens d'enregistrement sont associés à chaque source sonore (T, S, T₁, T₂, T₃, Tx).

11. Procédé selon la revendication 10, **caractérisé en ce que** les signaux sonores (TS, TS1, TS2, TS3, TS4, TR₉₀, TR₄₅, TL₉₀, TL₄₅) d'une source sonore (T, S, T₁, T₂, T₃, Tx) qui sont reçus par des moyens d'enregistrement qui ne sont pas associés à la source sonore sont supprimés par annulation d'écho acoustique ou suppression d'interférences croisées.

12. Système pour enregistrer des signaux sonores (TS, TS1, TS2, TS3, TS4, TR₉₀, TR₄₅, TL₉₀, TL₄₅) d'une ou de plusieurs sources sonores (T, S, T₁, T₂, T₃, Tx) présentant des caractéristiques directives variables dans le temps avec des moyens d'enregistrement dans un espace d'enregistrement et pour la reproduction des signaux sonores avec des moyens de reproduction de signaux sonores dans un espace de reproduction, **caractérisé en ce que** le système comprend des moyens pour la détection de la direction des signaux émises par la ou les sources sonores en fonction du temps et des moyens pour la reproduction des signaux sonores transmises en fonction de la direction principale d'émission détectée.

13. Système selon la revendication 12, **caractérisé en ce que** le système comporte au moins deux unités d'enregistrement qui sont associées à une source sonore (T, S, T₁, T₂, T₃, Tx) pour l'enregistrement des signaux sonores (TS, TS1, TS2, TS3, TS4, TR₉₀, TR₄₅, TL₉₀, TL₄₅) émises par cette source sonore et de leur direction principale d'émission.

14. Système selon la revendication 12, **caractérisé en ce que** le système comporte au moins une unité d'enregistrement qui est associée à une source sonore (T, S, T₁, T₂, T₃, T_{X}) pour l'enregistrement des signaux sonores (TS, TS1, TS2, TS3, TS4, TR₉₀, TR₄₅, TL₉₀, TL₄₅) émises par cette source sonore et des moyens optiques pour la détection de la direction principale d'émission de ladite source.

15. Système selon l'une quelconque des revendications 12 à 14, **caractérisé en ce que** le nombre d'unités d'enregistrement et/ou d'unités de reproduction correspond au nombre de sources sonores plus 2.

16. Système selon l'une quelconque des revendications 12 à 15, **caractérisé en ce que** les unités de reproduction sont des haut-parleurs ou un ensemble de haut-parleurs, un réseau de haut-parleurs ou une combinaison desdits dispositifs ou une source virtuelle, notamment une source virtuelle crée par synthèse de front d'onde.
